(19) **Europäisches Patentamt / European Patent Office / Office européen des brevets**

(11) **EP 4 614 477 A1**

(12) # EUROPEAN PATENT APPLICATION

(43) Date of publication:
**10.09.2025 Bulletin 2025/37**

(21) Application number: **24162384.2**

(22) Date of filing: **08.03.2024**

(51) International Patent Classification (IPC):
**G08G 1/01** (2006.01) **G06F 30/20** (2020.01)
**G06N 3/006** (2023.01) **G06N 7/04** (2006.01)
**G06N 7/06** (2006.01) **G06F 30/25** (2020.01)

(52) Cooperative Patent Classification (CPC):
**G08G 1/0112; G06F 30/20; G06F 30/25;**
**G06N 3/006; G06N 7/04; G06N 7/06; G08G 1/0116;**
**G08G 1/0129; G08G 1/0141; G08G 1/0145;**
G06F 2111/02; G06F 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **FUJITSU LIMITED**
**Kawasaki-shi, Kanagawa 211-8588 (JP)**

(72) Inventors:
• **SMILOVITSKIY, Maxim**
  **Slough, SL1 2BE (GB)**
• **OLMEZ, Sedar**
  **Slough, SL1 2BE (GB)**
• **VAN DEN BERGHE, Sven**
  **Slough, SL1 2BE (GB)**

(74) Representative: **Haseltine Lake Kempner LLP**
**Cheapside House**
**138 Cheapside**
**London EC2V 6BJ (GB)**

Remarks:
Amended claims in accordance with Rule 137(2)
EPC.

(54) ## METHOD AND APPARATUS FOR TRAFFIC SIMULATION

(57) A computer-implemented method for traffic simulation, the method comprising: accepting input of traffic data comprising data for a geographic region; generating a plurality of agent objects using the traffic data, each agent object representing a traffic participant and associated data; allocating the plurality of agent objects to a respective plurality of processing units; for each processing unit in parallel, executing a traffic simulation model for simulating the behaviour of the traffic participant, wherein the traffic simulation model comprises a car-following model, and the traffic simulation model comprises a lane-changing model and/or a junction management model.

| | |
|---|---|
| Accept input of traffic data comprising data for a geographic region | S11 |
| Generate a plurality of agent objects using the traffic data, each agent object representing a traffic participant and associated data | S12 |
| Allocate the plurality of agent objects to a respective plurality of processing units | S13 |
| For each processing unit in parallel, execute a microscopic traffic simulation model for simulating the behaviour of the traffic participant, wherein the traffic simulation model comprises a car-following model, and the traffic simulation model comprises a lane-changing model and/or a junction management model | S14 |

Figure 1

**EP 4 614 477 A1**

**Description**

**Field of the Invention**

The present invention relates to traffic simulations. More particularly, the present invention relates to a method traffic simulations and related data processing apparatuses, computer programs, and computer-readable storage media.

**Background of the Invention**

There exists a trend where the real world may be represented as a digital world. Concepts such as Smart Cities, Digital Twins (DTs), and the Metaverse have received particular attention, at least in part due to the new and improved technologies that enable advancements within these concepts, such as technologies related to Internet of Things (IoT), 5th Generation technology standard for telecommunications (5G), Artificial Intelligence (AI), and quantum computing.

For improvements related to transport, smart traffic systems are used to deliver a wide range of services to varied users at scale and in real time (or at least fast enough for effective action to be taken). It is desirable for systems to deliver a wide range of services, created by complex processing of primarily real-time sensed data acquired from sources in (or serving) a transport network (for example, from roads and from vehicles). The services are often required in "real time", such that immediate action to be taken by the users of the services. There are diverse data sources, generating different types of data at different rates. The services are also diverse and complex, using the data in a wide range of different ways.

As an example, a transport authority for a large city may create a simulation in the form of a system DT of its public transport infrastructure that provides a real-time virtual model of the flow of traffic throughout the city. The virtual model may be driven by data generated from a wide variety of sources in real time, including: vehicle movements from in-vehicle GPS, roadside sensors, CCTV analysis, routing requests, live dispatches of public transport, etc.; the state and operation of infrastructure, such as traffic lights; and movements of people, from mobile GPS, ticketing activity, CCTV, etc.

Agent-based modelling (ABM) is a computational modelling framework for simulating the actions and interactions of autonomous agents (both individual and collective entities such as organizations or groups). ABM has enabled computational social scientists and others to simulate a wide range of empirically observed phenomena within a computational sandbox environment, stress testing a system before adoption. Typically, an agent-based model is made up of two components, the agent and environment. The agent is an autonomous individual, often described as a software object that represents behaviour at the individual level. For example, an agent may represent a person, with characteristics such as age, height, weight. The environment represents some constrained space that may either be abstract or based on empirical data of the built-environment, within which the agents operate. With its widespread cross-disciplinary adoption, challenges of the ABM approach have been identified and investigated at length. One of the most prominent of these is the computational tractability of simulating intensive tasks. Sometimes, to overcome this challenge, modellers opt to reduce the complex representation of the real-world system by approximating complex behaviours or reducing the population of agents to the detriment of the simulation outcomes.

Modern ABMs are composed of rule-following agents (usually encoded as algorithms) that dynamically interact with their environment and/or each other. The state of each agent is usually contained in their state variables, which may be modified based on the interactions of the agent. The agents simulate local (microscopic) interactions that may lead to complex, emergent phenomena at various spatio-temporal scales. Recent increases in the availability of computing power have increased the uptake of such methods greatly increasing their popularity in research.

Microscopic ABMs take a detailed, bottom-up approach to modelling vehicular traffic. Unlike macroscopic models that focus on traffic flow as a whole, microscopic ABMs treat individual vehicles (and sometimes pedestrians) as independent agents with their own characteristics and decision-making capabilities. This allows for a more realistic simulation of traffic behaviour, taking into account factors like: individual driver behaviour (each agent may have different levels of aggression, patience, and skill, leading to diverse driving styles); vehicle characteristics (different vehicle types (cars, trucks, motorcycles) may have different acceleration, deceleration, and turning capabilities); environmental factors (traffic signals, lane markings, road geometry, and weather conditions may all impact agent behaviour); interactions between agents (agents may react to each other's actions, like changing lanes, braking, or merging, leading to emergent traffic phenomena like congestion and bottlenecks).

Current state of the art (SOA) traffic simulation techniques employ Central Processing Units (CPUs) to conduct calculations of vehicle states (the computational representation of the current configuration of a vehicle agent at some timepoint, $t$), as well as to go through decision trees of choosing strategic and tactical vehicle behaviour (accelerating, decelerating, stopping and so on). CPUs are configured to execute instructions of a computer program, such as arithmetic, logic, controlling, and input/output (I/O) operations.

The current SOA solution for microscopic-level computer modelling of large-scale transportation systems faces a computational complexity challenge when the methods involve a substantial number of agents (e.g., code representing vehicles or pedestrians). Accordingly, real-time simulations and modelling solutions become unattainable using CPUs as computation speeds drop below the mark where real-time factor equals one (i.e., one virtual second, simulated in one clock second). The nonlinear nature of complexity growth and the current hardware at hand makes it effectively impossible to compensate by purely adding more computational resources.

The inventors have therefore come to the realisation that techniques are required that provide improvements in realistic simulations of scenarios in digital representations of the real world.

**Summary of the Invention**

The solution herein caters to a spectrum of applications: from transportation and logistics to areas of predictive analytics, data science, and social DT implementation. The invention is defined in the independent claims. Specific embodiments are defined in the dependent claims.

According to an aspect of the invention, there is provided a computer-implemented method for traffic simulation. The method includes a step of accepting input of traffic data. The traffic data may be vehicular data and/or pedestrian data. The traffic data may include data that is obtained from one or more sensors within a given geographic region (the region of the traffic simulation). The traffic data may further include data related to current or upcoming weather, seasonality, prearranged events (such as concerts or sporting events), mobility flow, and correlated patterns in traffic from other geographic regions (adjacent geographic regions and nonadjacent geographic regions). The traffic data may relate to survey data, indicating - for example - the business of road segments or the use of public transport systems.

The method includes a step of generating a plurality of agent objects. This step if performed using the traffic data. Each agent object is representative of a traffic participant and that traffic participant's associated data. For instance, an agent object may be a software object that represents behaviour of a single vehicle (where the associated data includes that vehicle's speed and position), or may be a software object that represents a segment of road within the geographic region. Depending on the complexity of the simulation, there may be many hundreds or thousands of agent objects.

The method includes a step of allocating each of the agent objects to one more of a plurality of processing units. These processing units may be, for instance of or in a graphical processing unit (GPU): a specialised electronic circuit initially designed to accelerate computer graphics and image processing (either on a video card or embedded on the motherboards, mobile phones, personal computers, workstations, and game consoles). The processing units may be individual cores, groups of cores, threads, thread blocks, or warps composed of parallel threads.

The method includes - for each processing unit and each allocated agent object - executing a microscopic traffic simulation model in parallel (e.g., a first processing unit executes a traffic simulation in respect of a first allocated agent object, and - substantially in parallel - a second processing unit executes a traffic simulation in respect of a second allocated agent object). In this way, the method simulated the behaviour of the traffic participants as represented by the agent objects. In this context, a microscopic traffic simulation or flow model is a mathematical traffic model that simulates single vehicle-driver units, so the dynamic variables of the models represent microscopic properties like the position and velocity of the single vehicles. The traffic simulation model includes a car-following model, used to model or determine how traffic participants (e.g., vehicles or pedestrians) follow one another on a roadway or path. For instance, the model may determine the speed of a vehicle in relation to the vehicle ahead of it.

The traffic simulation model further includes at least one of a lane-changing model and a junction (or intersection) management model. A lane-changing model is used to determine lane choice on multi-lane roads and speed adjustments related to lane changing. A junction management model is used to determine the behaviour of traffic participants at different types of intersections in regard to - for example - right-of-way rules, gap acceptance, and avoiding junction blockage.

The techniques herein, while not changing the general underlying microsimulation principles that have been utilised in the current SOA, shifts the calculation burden from a computer's CPU with limitations as described above, to a more device with a plurality of processing units that may be used or operated in a parallel manner, such as a GPU device, thus ensuring speed and scalability of the traffic model.

The techniques herein provide for data input and data output that allows reading real-world traffic networks, recognition of agent origin and destination data and agent descriptions, as well as other adjacent process descriptions and algorithms within the traffic simulation model.

For instance, a microsimulation model may be transformed from a system of ordinary different equations (ODEs) into an equivalent description of agent's behaviour and encoded into a template-based ABM framework, which allows the traffic model to process each agent's calculations via a core on a GPU. GPUs process calculations more efficiently and sport the inherent ability to parallelise calculations. In this manner, the GPU may be used as a general purpose GPU (GPGPU), where general purpose computing is performed on GPUs, performing computation in applications traditionally handled by the CPU.

CPUs are limited as they are not optimised to perform the required algebraic operations to solve the technical challenge, nor do they possess large number of cores for parallel computations. CPUs typically have limited memory capacity compared to specialized hardware like GPUs or Tensor Processing Units (TPUs). Large-scale simulations may generate substantial amounts of intermediate data, and CPUs may struggle to manage this data efficiently, resulting in potential memory-related performance issues.

Scaling CPU-based simulations horizontally by adding more CPU nodes may introduce complexity and challenges related to communication and synchronization between nodes. Developing software that efficiently harnesses the power of multi-core CPUs for simulations is another significant hurdle, as it involves writing parallel code that optimally utilizes all available CPU cores and manages data dependencies, which is inherently complex and error-prone.

The techniques herein allow users to construct real-world transport network simulations on an unprecedented scale. These techniques enable simulations to operate at speeds that exceed real-time modelling, thereby significantly enhancing the efficiency and effectiveness of simulation processes.

Known simulation engines are hampered by scalability issues that limit their capacity to model complex and extensive systems. The techniques herein effectively eliminate these scalability constraints, enabling users to simulate large-scale transport networks without compromising the quality or accuracy of the results.

The skilled reader will appreciate the applicability of the techniques herein to such fields as traffic planning and engineering, where the techniques may be used for evaluating the impact of road infrastructure changes, traffic management strategies, and public transportation services. In the field of autonomous vehicle development, testing and evaluating the behaviour of self-driving cars in simulated environments may be provided by techniques herein. In the field of urban planning, the techniques herein allow for studying the impact of transportation systems on land use, air quality, and energy consumption.

Beyond transport networks, the techniques herein may be extended to model other systems of mass facilitation. This versatility makes the approach a valuable asset for diverse industries and sectors seeking to simulate and optimise various complex systems.

Moreover, the techniques herein address a significant technical drawback commonly observed in ABM literature within academia - namely the lack of compute power and scalability.

Optionally, executing the traffic simulation model comprises iteratively updating the state of the agent object based on that particular agent object's associated data (e.g., the speed and position of a vehicle agent object) and interactions with other agent objects (or associated data thereof). This iterative update may be performed until some predetermined simulation termination criterion is met or reached (for instance, a preset time duration, a number of iterations, or a preset level of convergence).

Optionally, the plurality of processing units may have access to a single pool data structure. Each processing unit may then, when executing the traffic simulation model, update agent object variables within the pool data structure. For instance, a processing unit may update agent object variables pertaining to the traffic participant represented by that agent object, such as speed or position. Each processing unit may access agent object variables within the pool data structure. For instance, a processing unit may access agent object variable values pertaining to itself (i.e., the traffic participant represented by that agent object) and agent object variable values pertaining to other agent objects within the simulation. That is, the agent object may access variables or other agent objects locally (i.e., the agent object may access their own state/variables stored in the pool). As an example, the iterative update of the state of an agent object may involve the plurality of agent objects accessing the above-described pool data structure.

Optionally, the plurality of processing units may be - at least in part - hosted on one or more remote servers. That is, the plurality of processing units may be cloud-based. In this manner, it is possible to simply increase the number of cores by forming clusters of GPUs and thereby postponing the point where the simulation's complexity growth starts affecting the speed. High-Performance Computing (HPC) clusters may be used in this respect. Of course, a combination of local processing units and remote processing units may be utilised.

Optionally, in the event that the simulation incorporates more agent objects than available processing units, the step of allocating the plurality of agent objects includes forming a processing queue for the processing units (and the subsequent simulation execution thereof). That is, executing the traffic simulation model in respect of a first group of agent objects may occur before executing the traffic simulation model in respect of a second group of agent objects.

Optionally, the traffic data accepted as input comprises a description of the traffic network. This description may be expressed in in compressed sparse row and/or compressed sparse column representation. These manners of expressing environmental data structures as graph structures ensure high performance access of this data during simulation run-time allowing for efficient querying of both upstream and downstream edges in the graphs (edges representing road or path segments, which may be agent objects in this context).

Optionally, the traffic data comprises data obtained from or corresponds to a digital twin (DT) of the geographic region under consideration. The method thereby creates comprehensive and realistic DTs, offering a high level of reliability and accuracy in modelling real-world systems. A DT in this context is a digital model of the traffic system that serves as the effectively indistinguishable digital counterpart of the traffic system for such purposes as simulation, integration, testing, monitoring, and maintenance of the real-life system.

Optionally, the traffic data comprises sensor data. This sensor data may be acquired in real-time from any or all of the following: GPS sensors or antennas; cellular network sensors or antennas; loop sensors; camera sensors; and vehicle parking sensors. The sensors may be on-board sensors, for example a GPS sensor or cellular (telecommunications) sensor provided within or on a vehicle or pedestrian, configured to transmit the position of the vehicle or pedestrian. Antenna signal triangulation may be used to determine traffic position. Alongside GPS data and cellular data, any other floating car data may be suitably used. Camera sensors may be used to remotely accumulate image data, upon which image processing techniques such as object detection may be used to provide vehicle or pedestrian positioning data. Vehicle parking sensors (either on-board or remote to the vehicle) may be used to indicate the parked position of vehicles, thereby providing, for example, parking facility occupation level. Of course, the sensor data may be historical sensor data, representative of a traffic system at some point in the past.

Optionally, the car-following model may be configured to update the velocity, $v$, and the position, $x$, of a vehicle traffic participant from time, $t$, over time step, $\Delta t$, according to:

$$v(t + \Delta t) = \max[0, v_{des}(t) - \eta],$$

$$x(t + \Delta t) = x(t) + v(\Delta t).$$

Here, $v_{des}$ is a highest velocity compatible with predefined traffic restrictions and $\eta$ is a random velocity perturbation to allow for deviations from optimal driving. One such implementation of this is car-following model is Krauss' car-following model, which facilitates a no-collision environment. Of course, alternative car-following models (including Gipps' model (Gipps, 1981)) may be used.

Optionally, the method may include parallel execution of two or more distinct scenarios, for comparison purposes. For instance, the method may include a step of modifying variables of the plurality of agent objects to generate a plurality of modified agent objects, which reflect some modification in the geographic region. For example, the user may wish to simulate the potential effects of a road closure or a change of speed limit and may modify the variables accordingly. The method may then include allocating the plurality of modified agent objects to the respective plurality of processing units, for example in a GPU. For each processing unit in parallel, the method may then include executing the microscopic traffic simulation model for simulating the behaviour of the traffic participant with the modification in the geographic region. In this way, each scenario may be investigated to ascertain what might happen within the traffic network during the simulated period. In running these versions of the simulation in parallel to each other, one may evaluate the outcomes of all scenarios faster than they unfold in real time.

Embodiments of another aspect of the invention include a data processing apparatus, which comprises a memory, a plurality of processing units, and means for accepting input. The memory stores computer-executable instructions to carry out a computer-implemented method for traffic simulation. The plurality of processing units and the means for accepting input are configured to execute the instructions.

Embodiments of another aspect of the invention include a computer program comprising instructions, which, when executed a data processing apparatus, causes the data processing apparatus to execute a computer-implemented method for a traffic simulation.

Embodiments of another aspect of the invention include a non-transitory computer-readable storage medium comprising instructions, which, when executed by a data processing apparatus, cause the data processing apparatus to execute a computer-implemented method for traffic simulation.

The invention may be implemented in digital electronic circuitry, or in computer hardware, firmware, software, or in combinations thereof. The invention may be implemented as a computer program or a computer program product, i.e., a computer program tangibly embodied in a non-transitory information carrier, e.g., in a machine-readable storage device or in a propagated signal, for execution by, or to control the operation of, one or more hardware modules.

A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both.

The invention is described in terms of particular embodiments. Other embodiments are within the scope of the following claims. For example, the steps of the invention may be performed in a different order and still achieve desirable results.

Elements of the invention have been described using the terms "processing unit" and "means for accepting input". The skilled person will appreciate that such functional terms and their equivalents may refer to parts of the system that are spatially separate but combine to serve the function defined. Equally, the same physical parts of the system may provide two or more of the functions defined. For example, separately defined means may be implemented using the same memory and/or processor as appropriate.

## Brief Description of the Drawings

Reference is made, by way of example only, to the accompanying drawings in which:

FIGURE 1 is a flowchart of a general method for traffic simulation according to embodiments;
FIGURE 2 is a schematic overview of a modular computing architecture, suitable for implementing aspects of the method for predicting evolution of a traffic simulation;
FIGURE 3 is an example ABM simulation calculation pipeline using a known technique;
FIGURE 4 is an example position update process schematic using a known technique;
FIGURE 5 is an example ABM simulation calculation pipeline using a traffic simulation method according to an embodiment;
FIGURE 6 is an example position update process schematic using a traffic simulation method according to an embodiment;
FIGURE 7 is a set of benchmark results illustrating performance metrics for an implementation of a traffic simulation method according to an embodiment and a known technique; and
FIGURE 8 is a block diagram of computational means for implementation of methods according to embodiments.

## Detailed Description

The algorithms of the current SOA traffic simulations are typically built around discretized ordinary differential equation (ODE) solvers, for example Simulation of Urban MObility (SUMO) (Krajzewicz et al. 2012), to update the vehicle's (or traffic participant's) speed and position. Each vehicle state is sequentially updated through each simulation step - this is expected, at best, to show a complexity growth of $O(n)$, where $n$ is the number of vehicles simulated. Although this is a moderate growth factor, without parallelization larger simulation models quickly end up with scalability problems, and become computationally intractable for real-time simulation requirements.

Many DTs (and indeed simulations of any sort) focus on replicating real-world complex systems; the problem with the real-world is that it contains a large population of individual entities and advanced processes that these entities undergo, such as people driving, or people walking around a city. For these complex systems to be simulated in real-time, computational tractability needs to be overcome and this is where past solutions struggle.

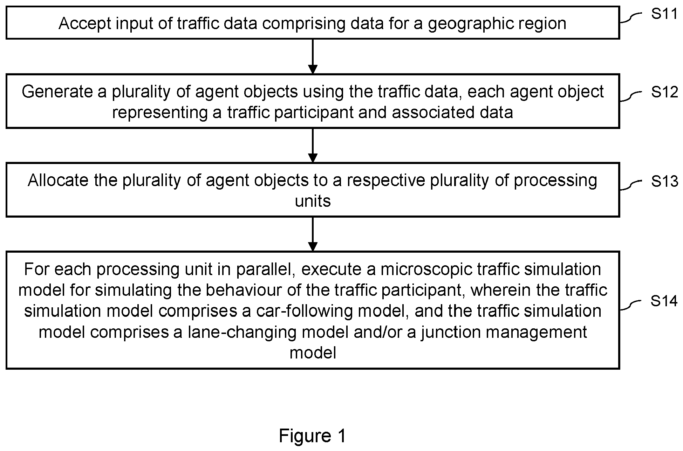

FIGURE 1 is an overview of a general method for traffic simulation, which addresses the above-described shortcomings of known simulation techniques. At S11, the computing means that is implementing the general method accepts input of traffic data comprising data for a geographic region. At S12, the computing means generates a plurality of agent objects using the traffic data. Each agent object represents a traffic participant and data associated with that traffic participant. At S13, the computing means allocates the plurality of agent objects to a respective plurality of processing units. At S14, for each processing unit in a parallel-wise manner, the computing means executes a microscopic traffic simulation model for simulating the behaviour of the traffic participant. Of course, as each processing unit is executing its own iteration of the traffic simulation, all agent objects and associated traffic participants are simulated. The traffic simulation model comprises a car-following model, and - in addition - the traffic simulation model comprises either a lane-changing model or a junction management model (or both).

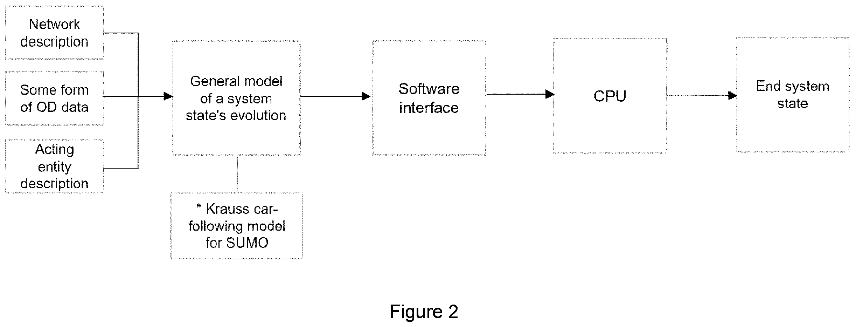

FIGURE 2 is an example simulation pipeline for a known technique (namely, SUMO). A description of the traffic network, some form of origin-destination (OD) data for traffic participants, and a description of the acting entities (e.g., vehicles or pedestrians) form a general model of a system state's evolution (using the Krauss' car-following model framework). Using a software interface (e.g., an API), this general model is processed using a conventional CPU. When the simulation terminates (e.g., after a predefined number of iterations or after a predefined time duration), the pipeline outputs the final state of the system.

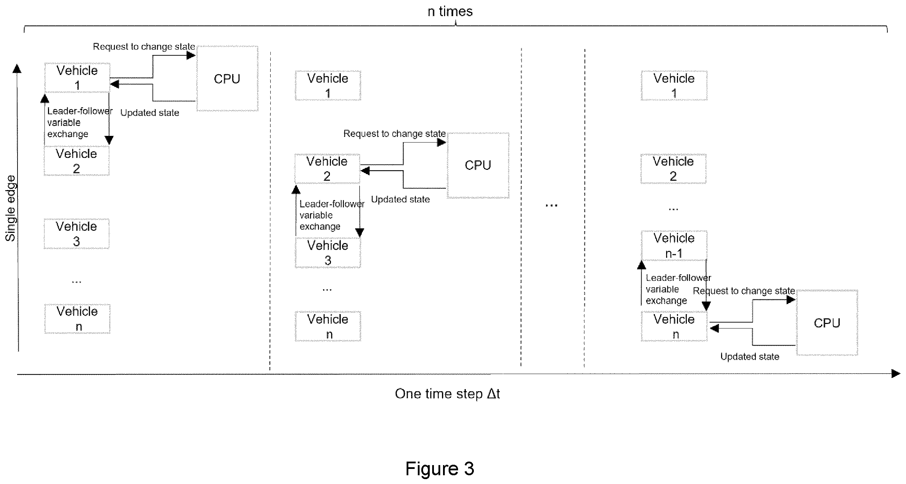

FIGURE 3 provides a schematic overview of a car's position update process within the known technique. The known techniques take $n$ (number of cars) steps each $\Delta t$ time step to sequentially update vehicle's position and speed. This provides for at least $O(n)$ complexity growth right from the point where a single vehicle is inserted into the simulation. In the illustrated example, vehicle 1 communicates with CPU and requests to change state; vehicle 1 then receives updated state variables and communicates these to the follower vehicle (vehicle 2) in this case. The follower vehicle similarly communicates its own variables to leader vehicle 1. Only when vehicle 1 has been updated does the process proceed to address vehicle 2, which undergoes the same process as vehicle 1. After $n$ iterations, all $n$ vehicles have obtained updated state variables and one time increment, $\Delta t$, of the traffic simulation has been complete.

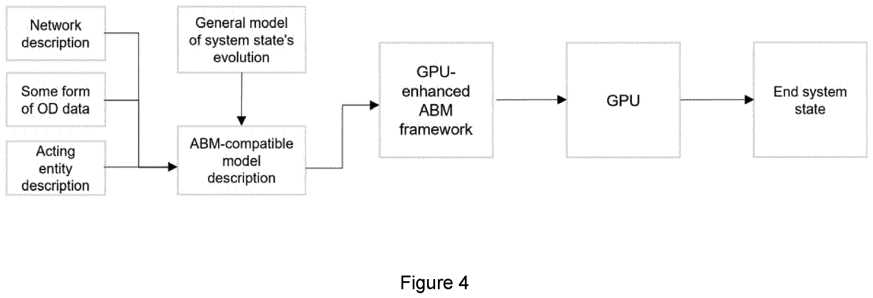

FIGURE 4 demonstrates an example calculation pipeline using techniques herein. A microsimulation model (Krauss's car-following model) is transformed from a system of ODEs into an equivalent description of agent's behaviour and encoded into a template-based ABM framework, which allows the model to process each agent's calculations via a core on a GPU. GPUs process calculations more efficiently and sport inherent ability to parallelise calculations.

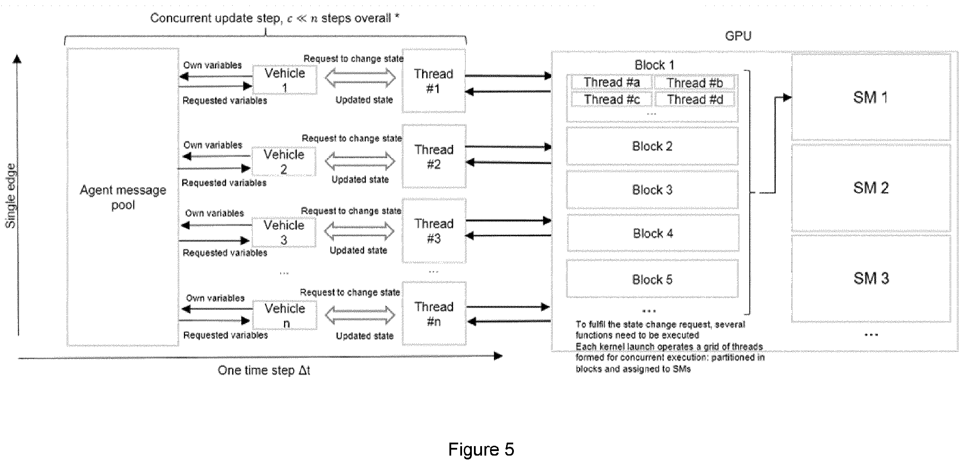

FIGURE 5 provides a schematic overview of a car's position update process within a method according to an embodiment. In this this implementation, Krauss's car following model is translated into an ABM compatible description and uses GPU-enhanced ABM framework to interface the model with a GPU. The referred framework ensures the ability to conduct parallel calculations for all of the agents present in the simulation by pooling their messages into a single structure that may be accessed by each agent at a time the update is required. Here, agents telegraph or communicate their speed and position into the pool data structure, and are able to immediately access variables left by their immediate leaders and followers. This allows the technique to simultaneously request each agent's update equations to be assigned to a GPU core. In comparison to FIGURE 3, in one time step, $\Delta t$, the present technique allows for handling of many more vehicles at any one time.

To fulfil the state change request, several functions need to be executed. Each kernel launch operates a grid of threads formed for concurrent execution. At least in an NVIDIA-based implementation, grids are partitioned in blocks and assigned to SMs for execution.

In a working implementation of the techniques herein, the inventors combine the principles of Krauss' no-collision car-following model (described by a system of ODEs) with a GPU-enhanced agent-based modelling framework to provide parallel computational capabilities that elevate the current SOA for traffic simulations in terms of scalability. The skilled reader will appreciate, of course, that other car-following models may be parallelised. A GPU is chosen to provide a plurality of processing units as GPU powered frameworks excel in speed and efficiency due to their parallel processing capabilities. They may perform complex calculations rapidly, making them ideal for large-scale simulations that demand intensive computational power. This speed accelerates simulations, leading to quicker insights and results.

Faster simulations lead to shorter time-to-insight. Users may iterate through simulations more rapidly, exploring a wider range of scenarios and hypotheses. Despite potential initial expenses, GPU-accelerated frameworks prove cost-effective in the long run due to their speed and energy efficiency. They may complete simulations faster, reducing overall computing resource requirements.

The framework herein uses a template-based programming environment that provides the tools to model and characterise individual agents while processing necessary computations by harnessing multiple processing units. Car-following model principles may be programmed for each agent individually. Agents simultaneously exchange messages containing necessary input variables. It makes it possible to update each agent's speed and position in a parallel manner, rather than sequentially which subsequently processes faster leading to quicker simulation result outputs.

In the present working implementation, computations required to update each agent's state are assigned to an individual Compute Unified Device Architecture (CUDA) core (floating point units in an NVIDIA graphics card) in a GPU via the framework's interface. CUDA is a proprietary and closed source parallel computing platform and application programming interface (API) that allows software to use certain types of GPUs for general purpose processing. CUDA cores are optimised to perform the required algebraic computations with higher efficiency as compared to a conventional CPU core. GPUs such as NVIDIA's possess many thousand cores and may be integrated into a High-Performance Computing (HPC) cluster for a seamless scaling effect. Of course, other GPUs from other manufacturers, including AMD and Intel, may be used. While the present approach does not change the computational complexity of the underlying simulation, the techniques herein significantly expand on the ability of GPUs to perform parallel computations, shifting the inflection point at which complexity growth starts to take effect on the execution speed of the simulation. The more CUDA cores available, the further the inflection point is shifted in terms of the number of agents in the simulation.

In the present working implementation, the microscopic traffic simulation model is provided by the discretized ODE solver SUMO. Of course, other microscopic traffic simulation models and solvers are equally appropriate, including AIMSUN (Casas et al. 2010), MATsim (W Axhausen et al. 2016), ARCHISIM (Champion et al. 2001), and VISSIM (Fellendorf et al. 2010).

While being well-developed pieces of software, highly stable and reliable, with diverse toolboxes and polished user interfaces, current SOA solutions for microscopic-level modelling of large-scale transportation systems face computational complexity challenges when the models reach substantial numbers of agents (e.g., simulations of large crows). Accordingly, real-time simulations and modelling solutions become unattainable as computation speeds drop below the mark where real-time factor equals 1 (1 virtual second, simulated in one clock second). The nonlinear nature of complexity growth and the current hardware at hand makes it impossible to compensate by purely adding more computational resources.

In the present working implementation, mapping between the formal ABM agent specifications for SUMO with C based scripting and optimised CUDA code for GPU implementation is provided with the open-source software Flexible Large Scale Agent Modeling Environment for GPUs (FLAME-GPU). FLAME-GPU is an agent based simulation framework which possesses a parallel architecture of modern GPPs to increase the performance of complex systems simulations. FLAME-GPU demonstrates this by abstracting the GPU, and parallelism, away from modellers to provide a separation of concerns ensuring that models are described separately from their implementation. The increase in performance offered by the framework allows for large scale models to be constructed and simulated within a reasonable time. The framework presents a general approach to agent based simulation and is not restricted to any specific domain. It has been used for a range of simulation problems including pedestrian simulations, simple road network simulations, and cellular models of biological systems. To utilise FLAME-GPU, modellers map their complex system to an abstraction of agents (representing individuals with internal memory), messages (which allows agents to indirectly communicate via globally accessible message lists), and the environment (which represents information accessible to all agents within the system).

The model aims to re-create traffic movement on a microscopic level over a real-world traffic network. Each vehicle is modelled separately concerning its speed and position while moving along the street network that contains lanes, intersections, traffic lights, speed limits, as well as other real-world attributes that factor into a vehicle's movement from one point of the network to the other. A vehicle is expected to obey the set rules while active in the simulation.

The proposed vehicle model behaviour is based on a modified Krauss car-following model: the same microscopic simulation model that SUMO uses. Krauss car-following model is based on the principle of no-collision in which the position and speed of the agent are updated in accordance with a safety rule: an update is deemed safe if, for each step, a minimum distance if maintained between agents at all times (i.e., it upholds the principle of no collision). The basic summary of the model may be represented as follows. Assuming every vehicle moves at the highest velocity compatible with stated restrictions, $v_{des}$, we have:

$$v(t + \Delta t) = \max[0, v_{des}(t) - \eta], \qquad (1)$$

$$x(t + \Delta t) = x(t) + v(\Delta t) \qquad (2)$$

The parameter $\eta$ (> 0) is a random velocity perturbation to allow for deviations from optimal driving. This perturbation may be assumed to be $\delta$-correlated in time. The choice of time step $\Delta t$ may be subject to the reaction time of a driver, $\tau$

The desired velocity may, for example, be given as a function of the maximum possible velocity, $v_{max}$ (i.e., the desired velocity of the driver under consideration), the maximum safe velocity, $v_{safe}$ (i.e., a driver always chooses a velocity that is no higher than the maximum safe velocity):

$$v_{des}(t) = \min\left[v_{maz}, v(t) + a(v)\Delta t, v_{safe}(t)\right], \qquad (3)$$

Here, $a$ is the acceleration of the agent. $v_{safe}$ may be an empirically derived value or may be defined according to:

$$v_{safe}(t) = v_l(t) + \frac{g(t) - g_{des}(t)}{\tau_b + \tau}, \qquad (4)$$

where the time scale $\tau_b$ is defined as $\bar{v}/b(\bar{v})$, $b$ being the deceleration of the agent (e.g., one may decelerate from any given speed in any given time step only as much as the brakes would allow). Here, $v_l$ is the velocity of the leading vehicle (another agent), and $g$ is the gap between the leading vehicle and the following vehicle (another agent). The desired gap, $g_{des}$, may be empirically chosen or may be given as, for example, functions of the gap between the vehicles, and of their corresponding velocities, such as: $\tau v_f(t)$. $\bar{v} = (v_l + v_f)/2$ is referred to as the braking time function. The reader is directed to the work of Krauss, S. (1998) for a complete derivation of the equations used herein.

Lane-changing rules and intersection mechanics follow those described in the work of Erdmann, J ("SUMO's lane-changing model", 2014) and Erdmann, J. & Krajzewicz ("SUMO's road intersection model", 2011). These models are built on top of earlier models used in SUMO, adding internal junction support to better represent vehicle behaviour while navigating complex intersections, as well as an improved, more complex hierarchy of lane and velocity selection choices that include strategic, tactical, cooperative and regulatory triggers. These updated rule sets are used by default in the latest version of SUMO and are meant to improve the accuracy of an already reliable model.

SUMO's lane-changing model determines vehicle's lane choice for a single simulation stem based on both the route of the vehicle, as well as historical and current traffic conditions in the vehicle's surrounding, and computes necessary changes in velocity for the vehicle itself and for obstructing vehicles in order to promote execution of aforementioned choice In this model, the road network consists of edges, which are one-way street segments with a fixed number of lanes and speed limit. Each edge is made up of parallel lanes. Vehicles are defined by a route comprising a sequence of edges, and during simulation, they move along lanes with some freedom in choosing which lane to use (unless restricted). Connectivity is defined at the lane level, where each lane may connect to zero or more other lanes. If a vehicle's current lane does not connect to the next edge on its route, it needs to change lanes to continue.

The lane-changing model considers the vehicle in front (leader) to determine a vehicle's speed, regardless of whether it's in the same lane or the preferred next lane. The car-following model defines the follower's speed based on the leader. Lane changes are only possible if there is enough space in the target lane and if the vehicle would not get too close to the leader or follower in that lane (as defined by the car-following model). If these conditions are not met, the vehicle experiences a "blocking leader" or "blocking follower".

Each simulation step involves several sub-steps for each vehicle:

1) Computing preferred next lanes: The simulation identifies the most suitable lane to switch to in the future.
2) Safe speed calculation: This step considers both staying in the current lane and potentially changing lanes, integrating previous lane-change requests.
3) Lane-changing decision: The model determines if the vehicle should stay, change lanes to the left, or change lanes to the right.
4) Manoeuvre execution or speed request calculation: Depending on the urgency of the lane change, the vehicle either attempts the change or plans its speed for the next step, considering future lane changes.

Again, the reader is directed to the work of Erdmann, J ("SUMO's lane-changing model", 2014) for a full derivation and explanation of one example lane-changing model.

SUMO's junction management model represents intersections as nodes, with incoming and outgoing edges (roads with one or more lanes). Inside an intersection, "internal lanes" connect incoming lanes to outgoing lanes. Vehicles move across these internal lanes just like they would on regular lanes. This allows for detailed vehicle tracking and modelling of intersection capacity.

Each lane may have multiple potential next lanes. These connections are defined by "links," forming a "lane-graph" where lanes are connected, distinct from the "intersection-graph" where intersections are connected by roads.

At most intersections, vehicles wait at the stop line before entering, allowing them to cross without conflicting traffic. However, for specific situations like left turns, SUMO allows waiting in the middle of the intersection. This is modelled by splitting internal lanes and introducing an "internal intersection" within the main one. Vehicles using these lanes pass the initial entry point and wait at the internal intersection instead. The way right-of-way is determined at these internal intersections is the same as at regular ones.

Again, the reader is directed to the work Erdmann, J. & Krajzewicz ("SUMO's road intersection model", 2011) for a full derivation and explanation of one example junction management model.

A system of equations from (1) to (4), lane-changing and intersection-crossing rules, as well as other rules necessary to update the state of the system, are expressed as a series of agent functions. Agent variables necessary to execute the functions are stored and exchanged through a global messaging pool - a feature facilitated by FLAME-GPU's design. The request for a state update of the system is fulfilled by launching function kernels for all agents in the agent-state population. Each agent is represented by a thread, and as a kernel is launched, a grid of threads is formed and is subsequently combined into blocks which are then assigned for concurrent execution to available Streaming Multiprocessors (SMs) within a GPU. An NVIDIA GPU is built around an array of SMs and a multithreaded program may be partitioned into blocks of threads that execute independently from each other, so that a GPU with more processing units will automatically execute the program in less time than a GPU with fewer processing units. Kernels in this context are program functions that, when called, are executed N times in parallel by N different CUDA threads (as opposed to only once like, for instance, regular C++ functions).

Whenever the number of threads is less than a GPU's maximum thread capacity $N_{max}$, one may expect the process to demonstrate roughly $0(1)$ computational complexity. In cases where the number of threads $n$ exceeds a GPU's maximum thread capacity $N_{max}$, it then takes roughly $c = n\%N_{max}$ ($n$ modulo $N_{max}$) steps to complete each kernel run, hence showing a complexity of $0(c)$. While this scheme does not fundamentally change the time complexity of the algorithm, it allows for a smooth and efficient computational scaling process.

It is possible to increase the available thread capacity by accessing clusters of GPUs to postpone the point where algorithm's complexity growth starts affecting the speed. One manner of doing so involves use of high-performance computing, HPC, clusters for deep learning, which are currently available for access on-demand via numerous cloud services.

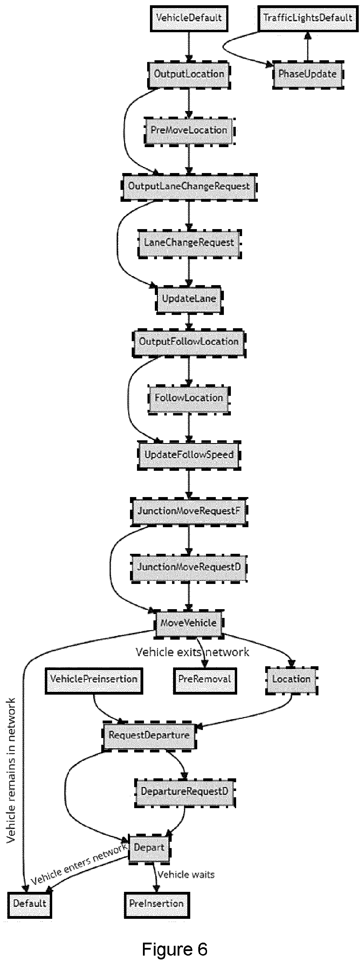

FIGURE 6 illustrates an example resulting pipeline of the simulation. Note that the current implementation of the traffic simulator accepts the same input files as SUMO, which makes for straightforward testing, validation, and comparison. Nodes bound with a solid line represent agent states. For example, the "vehicle default" represents an agent object corresponding to a vehicle with default configuration settings (e.g., a default value for maximum speed). As mentioned above, agent objects need not solely correspond to moving traffic participants, but may represent static traffic participants, such as traffic lights, or may represent abstract routines, such as the "pre-insertion" of moving traffic participants (for instance, the entrance of a new vehicle into the geographic area under consideration).

Nodes bound by a dashed line represent agent functions, which are responsible for the behaviour of the agent object. For example, the agent function "output location" represents instructions provided for an agent object to output (e.g., into a shared data pool, accessible by all processing units) that agent object's position coordinates.

Nodes bound by a dotted and dashed line represent messages that create execution order dependencies between agents and functions. That is, these are data requests. For instance, the data request "PreMoveLocation" is a data request for the location of the vehicle agent object of interest, prior to any lane change or movement along a road segment.

In order to translate the transportation model in to the FLAME-GPU framework, a network based messaging approach may be adopted for the bulk of agent communication. This approach allows agents to exist within a static multi-lane network, using the network structure to query agents within the same or adjacent edges or lanes. Both a compressed sparse row (CSR) and compressed sparse column (CSC) representation of the network may be stored within the agent environment, allowing for efficient querying of both upstream and downstream edges. Network lookups may be used for calculations to find followers and leaders (components of traversing the network and entering junctions). Elsewhere, network communication is used within the contexts of vehicle following, lane changing and vehicle insertion (into the network). Within the FLAME-GPU implementation, vehicles are able to make dynamic choices of lanes but use pre-computed routes to reach their destinations; the equivalent behaviour is observed from within SUMO by using equivalent route files generated from SUMOs routing tool.

The FLAME-GPU model uses agents to represent vehicles. The SUMO model parameters and distributions may be mapped to FLAME-GPU agent variables. Vehicle agents in this working implementation have three distinct states: the default state is "driving" in which agents will perform call following, lane changing, and traversal through junctions. Vehicles also utilise states for pre-insertion into the network and pre-removal from the network. The former uses gap acceptance to ensure vehicles may safely enter a road edge; the latter allows agents to persist within the model for data collection purposes. Agents may also be used to represent sections of the road network (so are not moving traffic participants, per se): this facilitates data aggregation and collection. Additionally, agents may be used to represent traffic lights, which use a fixed pattern (e.g., on or off) within the FLAME-GPU model.

The techniques herein may be used for any ABM simulation implementation. A straightforward example includes having traffic data fed in a SUMO-compatible format into the several instances of the simulation. Each simulation instance may be representative of a scenario of what might happen within the traffic network during the simulated period. These instances of a simulation may be run in parallel in order to evaluate the outcomes of all scenarios, faster than they unfold in real time. The skilled reader will appreciate that the techniques herein may be employed in, for example, the areas of urban management, smart city development, statistical modelling, environmental research and logistics management.

As an example implementation, the inventors demonstrate applicability to a real-world traffic network. The purpose of the following example is to quantitatively demonstrate the computational scalability of the proposed solution to simulating large-scale agent-based models using vehicle traffic as a domain for exploration. A quantitative measure that has been used in the past is the real-time factor (RTF). RTF may be described as the quotient of simulated time / computation time; if one hour is simulated in 360 seconds the real-time factor is 10. RTF greater than one indicates the simulation is running faster than real-time, and less than one is slower than real-time. The inventors adopt this measure to directly benchmark the present technique with that of SUMO's. Therefore, the example experiments here are conducted on both platforms using the same parameter inputs with the same hardware. The reason why SUMO is chosen as the benchmark model, is due to its widespread adoption in research.

It is common for traffic simulation engines to be tested over synthetic grids: synthetic networks have regular repeating patterns, which lead to relatively consistent performance characteristics. The techniques herein may handle the scale of a complex simulation but also the complexity that comes with real-world networks, as they are much more varied in their characteristics and are much less uniform.

The network of choice for the present example experiment is the Isle of Wight transportation system. This system was chosen as it may practically be viewed as a miniature test bed that has enough network complexity to showcase the challenges of real-world traffic modelling. There are certain caveats to be mentioned. First of all, working with a real world network prevents a researcher from being able to procedurally scale its size. Secondly, quality real-world data of cars moving around the road network is difficult to acquire. Hence, to populate the network, random trip-generating utilities are used that were developed to accompany SUMO simulations, namely randomTrips and duarouter functions. To scale the simulation, the vehicle insertion density parameter is varied starting from 60 and going up to 600 vehicles per hour per kilometre of road network's length, in increments of 60 for the first 360 seconds.

Each simulation is repeated three times and a mean value is presented as output. Simulation runs are initialised at timestep 0 and terminate at timestep 3600 (equivalent to one hour). The machine used to perform the experiments has the following specifications: Intel Core i7-5930K, NVIDIA GeForce RTX 3090 (24 GiB), 64 GB host memory. The machine used is running Ubuntu 20.04.6 LTS.

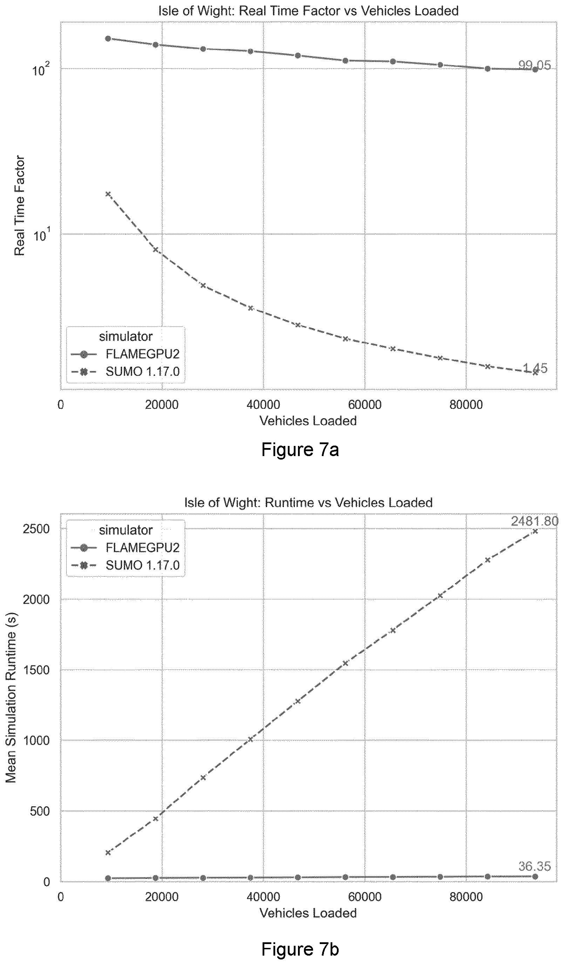

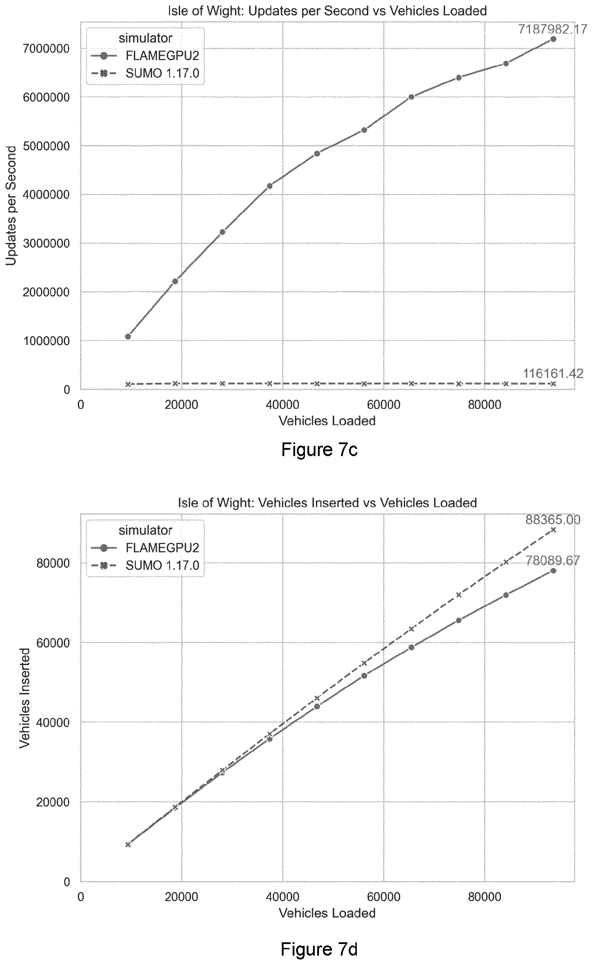

FIGURES 7 presents four sub-figures comparing the method according to an embodiment to conventional SUMO.

FIGURE 7a plots the RTF on a log-scale (y-axis) and compares the method according to an embodiment (employing FLAME-GPU) with SUMO. As the number of vehicles increases in the simulation, SUMO exhibits a decline in performance, while the method according to an embodiment maintains a high RTF, achieving an average of approximately 99 compared to SUMO's 1.45 at the end of the simulation. These results indicate that the technique herein may simulate a larger population of vehicles compared to SUMO in a significantly shorter time.

FIGURE 7b supplements these finding and displays the average simulation time in seconds as the number of vehicles increases. While SUMO takes over 2,481 seconds (41.35 minutes) to simulate approximately 95,000 vehicles, the method according to an embodiment completes the simulation in just around 36 seconds, representing a speedup of approximately 68 times.

Furthermore, SUMO's simulation time increases linearly with the number of vehicles, while the time with the method according to an embodiment remains relatively consistent.

The interactions between agents and their environment may be computationally intensive as the number of agents increases. FIGURE 7c compares the updates per second (the number of state-changes across all agents every second) with the number of vehicles in the model. The interactions grow linearly with the number of vehicles in the method according to an embodiment, while SUMO maintains an average of around 116,000 updates per second. The final data point, with 95,000 vehicles loaded, shows the method according to an embodiment performing vehicle updates approximately 62 times faster than SUMO.

The last benchmark test in FIGURE 7d evaluates how quickly the model may compute available spots on the street network to insert a new vehicle. SUMO appears to outperform the method according to an embodiment, indicating that SUMO is more efficient in loading new vehicles into street networks. The graph reveals that the insertion rate of the method according to an embodiment decreases as the number of vehicles increases, partly due to small differences in congestion clearance compounding over time. If vehicles join a queue faster than they leave even minor differences in clearance rate may quickly accumulate, leading to fewer available slots for new vehicles to insert in the model with the slower clearance rate.

These results demonstrate the performance advantages of the techniques herein over SUMO. Algorithmic efficiency in loading new agents into an environment is an area where SUMO excels. However, in terms of raw performance (the time taken to execute a model from timestep 0 to N), simulations executed using a plurality of processing units in the form of a GPU may be significantly faster than those primarily utilising the CPU.

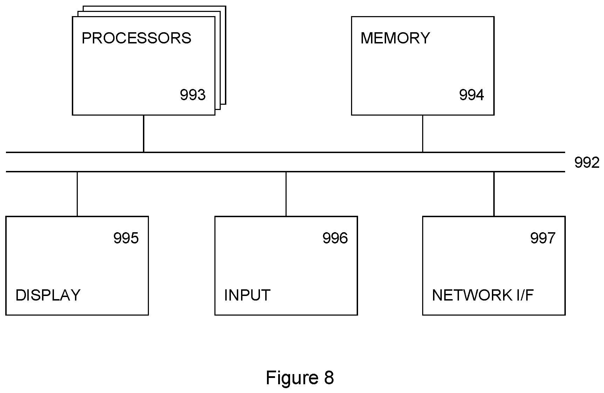

FIGURE 8 is a block diagram of a computing device, such as a data processing server, which embodies the present invention, and which may be used to implement a method for traffic simulation. The computing device comprises a plurality of processors or processing units 993 and memory, 994. Optionally, the computing device also includes a network interface 997 for communication with other computing devices, for example with other data storage devices or external data processing devices. An embodiment may be composed of a network of such computing devices.

Optionally, the computing device also includes one or more input mechanisms such as keyboard and mouse 996, and a display unit such as one or more monitors or screens 995. The components are connectable to one another via a bus 992.

The memory 994 may include a computer readable medium, a term which may refer to a single medium or multiple media (e.g., a centralised or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The plurality of processors 993 is configured to control the computing device and execute processing operations, for example executing code stored in the memory to implement the method for traffic simulation and the associated simulation described here and in the claims. The memory 994 stores data being read and written by the plurality of plurality of processors 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an ASIC, a FPGA, a digital signal processor (DSP), network processor, or the like. In one or more embodiments, a processor is configured to execute instructions for performing the operations and steps discussed herein.

Display 995 may display a user interface. Input 996, in the form of a touchscreen or screen and keyboard and/or voice, may be used for user input. The user interface may be embodied as a user application shown on the display and optionally connected to the audio input/output of the user device for voice input and audio output. Local storage, for example of simulation parameters, may be provided by memory 994, and plurality of processors 993 may carry out background functions. The core functionality (execution of a simulation, for example) may preferably be implemented remotely from the user device, for example on the cloud.

The network interface (network I/F) 997 may be connected to a network, such as the internet, and is connectable to other such computing devices via the network. The network I/F 997 may control data input/output from/to other apparatus via the network. Other peripheral devices such as microphone, speakers, etc. may be included in the computing device.

Plurality of processors 993 may execute instructions stored on a portion of the memory 994 to exchange data between modules via bus 992 via network I/F 997 to external entities, such as traffic sensors.

Methods embodying the present invention may be carried out on a computing device such as that illustrated in FIGURE 8. Such a computing device need not have every component illustrated in FIGURE 8, and may be composed of a subset of those components. Methods embodying the present invention may be carried out by a single computing device in communication with one or more data storage servers via a network. The computing device may be a data storage itself storing preconfigured interventions, buffered sensor data, historical sensor data, multi-function optimisation models and parameters, etc.

A method embodying the present invention may be carried out by a plurality of computing devices operating in cooperation with one another. One or more of the plurality of computing devices may be a data storage server storing at least a portion of preconfigured simulation parameters, traffic network details, agent object data, etc.

The various methods described above may be implemented by a computer program. The computer program may include computer code (e.g., instructions) arranged to instruct a computer to perform the functions of one or more of the various methods described above. For example, the steps of the methods described in relation to FIGURE 1 may be performed by the computer code. The steps of the methods described above may be performed in any suitable order. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD. The instructions may also reside, completely or at least partially, within the memory 994 and/or within controller circuitry of plurality of processors 993 during execution thereof by the computing system, the memory 994 and the controller circuitry of plurality of processors 993 also constituting computer-readable storage media.

In an implementation, the modules, components and other features described herein may be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may comprise a special-purpose processor, such as an FPGA or an ASIC. A hardware component may also include programmable logic or circuitry that is temporarily configured by software to perform certain operations.

In addition, the modules and components may be implemented as firmware or functional circuitry within hardware devices. Further, the modules and components may be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing", "enabling", "maintaining", "identifying", "obtaining", "accessing", or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

While certain embodiments have been described, these embodiments have been presented by way of example only, and are not intended to limit the scope of the inventions. Indeed, the novel methods and apparatuses described herein may be embodied in a variety of other forms; furthermore, various omissions, substitutions and changes in the form of methods and apparatus described herein may be made.

**Claims**

1. A computer-implemented method for traffic simulation, the method comprising:

    accepting input of traffic data comprising data for a geographic region;
    generating a plurality of agent objects using the traffic data, each agent object representing a traffic participant and associated data;
    allocating the plurality of agent objects to a respective plurality of processing units used in parallel;
    for each processing unit in parallel, executing a traffic simulation model for simulating the behaviour of the traffic participant, wherein the traffic simulation model comprises a car-following model, and the traffic simulation model comprises a lane-changing model and/or a junction management model.

2. The method according to claim 1, wherein executing the traffic simulation model comprises iteratively updating the agent object based on the agent object's associated data and interactions with other agent objects until a predetermined simulation termination criterion is reached.

3. The method according to claim 1 or claim 2, wherein the plurality of processing units has access to a pool data structure, and wherein, for each processing unit, executing the traffic simulation model comprises updating and/or accessing agent object variables within the pool data structure.

4. The method according to any preceding claim, wherein the plurality of processing units is hosted at least in part on a remote server.

5. The method according to any preceding claim wherein, when the plurality of agent objects comprises more agent objects than the plurality of processing units comprises processing units, allocating the plurality of agent objects comprises forming a processing queue for the processing units.

6. The method according to any preceding claim, wherein traffic data further comprises a description of the traffic network in compressed sparse row and/or compressed sparse column representation.

7. The method according to any preceding claim, wherein the traffic data comprises data obtained from a digital twin of the geographic region.

8. The method according to any preceding claim, wherein the traffic data comprises sensor data, acquired from any or all of the following:

    GPS sensors or antennas;
    cellular network sensors or antennas;
    loop sensors;
    camera sensors; and
    vehicle parking sensors.

9. The method according to any preceding claim, wherein the car-following model updates the velocity, $v$, and the position, $x$, of a vehicle traffic participant from time, $t$, according to:

$$v(t + \Delta t) = \max[0, v_{des}(t) - \eta],$$

$$x(t + \Delta t) = x(t) + v(\Delta t),$$

where $v_{des}$ is a highest velocity compatible with predefined traffic restrictions and $\eta$ is a random velocity perturbation to allow for deviations from optimal driving.

10. The method according to any preceding claim, further comprising:

modifying the plurality of agent objects to generate a plurality of modified agent objects, reflecting a modification in the geographic region;
allocating the plurality of modified agent objects to the respective plurality of processing units;
for each processing unit in parallel, executing the traffic simulation model for simulating the behaviour of the traffic participant with the modification in the geographic region.

11. A data processing apparatus comprising:

a memory storing computer-executable instructions to carry out the method according to any of claims 1 to 10; and
a plurality of processing units and means for accepting input configured to execute the instructions.

12. A computer program comprising instructions that, when the program is executed by a computer, cause the data processing apparatus of claim 12 to carry out the method according to any of claims 1 to 10.

13. A computer-readable medium having stored thereon the computer program of claim 12.

**Amended claims in accordance with Rule 137(2) EPC.**

1. A computer-implemented method for traffic simulation, the method comprising:

accepting input of traffic data comprising data for a real-world geographic region;
generating a plurality of agent objects using the traffic data, each agent object representing a traffic participant and associated data;
allocating the plurality of agent objects to a respective plurality of processing units used in parallel;
for each processing unit in parallel, executing a traffic simulation model for simulating the behaviour of the traffic participant, the behaviour including position and speed, wherein the traffic simulation model comprises a car-following model, and the traffic simulation model comprises a lane-changing model and/or a junction management model;
modifying the plurality of agent objects to generate a plurality of modified agent objects, reflecting a modification in the geographic region;
allocating the plurality of modified agent objects to the respective plurality of processing units;
for each processing unit in parallel, executing the traffic simulation model for simulating the behaviour of the traffic participant with the modification in the geographic region; and
comparing the behaviour of traffic participants and the behaviour of traffic participants with the modification.

2. The method according to claim 1, wherein executing the traffic simulation model comprises iteratively updating the agent object based on the agent object's associated data and interactions with other agent objects until a predetermined simulation termination criterion is reached.

3. The method according to claim 1 or claim 2, wherein the plurality of processing units has access to a pool data structure, and wherein, for each processing unit, executing the traffic simulation model comprises updating and/or accessing agent object variables within the pool data structure.

4. The method according to any preceding claim, wherein the plurality of processing units is hosted at least in part on a remote server.

5. The method according to any preceding claim wherein, when the plurality of agent objects comprises more agent objects than the plurality of processing units comprises processing units, allocating the plurality of agent objects comprises forming a processing queue for the processing units.

6. The method according to any preceding claim, wherein traffic data further comprises a description of the traffic network in compressed sparse row and/or compressed sparse column representation.

7. The method according to any preceding claim, wherein the traffic data comprises data obtained from a digital twin of the geographic region.

8. The method according to any preceding claim, wherein the traffic data comprises sensor data, acquired from any or all of the following:

GPS sensors or antennas;
cellular network sensors or antennas;
loop sensors;
camera sensors; and
vehicle parking sensors.

9. The method according to any preceding claim, wherein the car-following model updates the velocity, v, and the position, *x*, of a vehicle traffic participant from time, *t*, according to:

$$v(t + \Delta t) = \max[0, v_{des}(t) - \eta],$$

$$x(t + \Delta t) = x(t) + v(\Delta t),$$

where $v_{des}$ is a highest velocity compatible with predefined traffic restrictions and $\eta$ is a random velocity perturbation to allow for deviations from optimal driving.

10. A data processing apparatus comprising:

a memory storing computer-executable instructions to carry out the method according to any of claims 1 to 10; and
a plurality of processing units and means for accepting input configured to execute the instructions.

11. A computer program comprising instructions that, when the program is executed by a computer, cause the data processing apparatus of claim 10 to carry out the method according to any of claims 1 to 9.

12. A computer-readable medium having stored thereon the computer program of claim 11.

Accept input of traffic data comprising data for a geographic region — S11

Generate a plurality of agent objects using the traffic data, each agent object representing a traffic participant and associated data — S12

Allocate the plurality of agent objects to a respective plurality of processing units — S13

For each processing unit in parallel, execute a microscopic traffic simulation model for simulating the behaviour of the traffic participant, wherein the traffic simulation model comprises a car-following model, and the traffic simulation model comprises a lane-changing model and/or a junction management model — S14

Figure 1

Figure 2

Figure 3

Figure 4

Figure 5

Figure 6

Isle of Wight: Real Time Factor vs Vehicles Loaded

Figure 7a

Isle of Wight: Runtime vs Vehicles Loaded

Figure 7b

Figure 7c

Figure 7d

Figure 8

**EUROPEAN SEARCH REPORT**

Application Number

EP 24 16 2384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAO JIAJIAN ET AL: "Exploring Execution Schemes for Agent-Based Traffic Simulation on Heterogeneous Hardware", 2018 IEEE/ACM 22ND INTERNATIONAL SYMPOSIUM ON DISTRIBUTED SIMULATION AND REAL TIME APPLICATIONS (DS-RT), IEEE, 15 October 2018 (2018-10-15), pages 1-10, XP033492562, DOI: 10.1109/DISTRA.2018.8601016 [retrieved on 2019-01-03] * the whole document * | 1-13 | INV. G08G1/01 G06F30/20 G06N3/006 G06N7/04 G06N7/06 G06F30/25 |
| X | MASTIO MATTHIEU ET AL: "Distributed Agent-Based Traffic Simulations", IEEE INTELLIGENT TRANSPORTATION SYSTEMS MAGAZINE, IEEE, USA, vol. 10, no. 1, 1 April 2018 (2018-04-01), pages 145-156, XP011676126, ISSN: 1939-1390, DOI: 10.1109/MITS.2017.2776162 [retrieved on 2018-01-18] * abstract * * I. Introduction; II. Generic Agent-Based Traffic Simulations, A. The Multiagent System; II. Generic Agent-Based Traffic Simulations, C. Microscopic Simulation; IV. Distirbution, A. Agent-Based Distribution; V. Diffusive Load Balancing * | 1-13 | |

TECHNICAL FIELDS
SEARCHED (IPC)

G08G
G06F
G06N

The present search report has been drawn up for all claims

| Place of search | Date of completion of the search | Examiner |
|---|---|---|
| The Hague | 7 August 2024 | Pariset, Nadia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)